# EUROPÄISCHE PATENTSCHRIFT

(11) **EP 3 498 999 B1**
(45) Veröffentlichungstag und Bekanntmachung des Hinweises auf die Patenterteilung: **16.12.2020**
(21) Anmeldenummer: 18465501.7
(22) Anmeldetag: 02.02.2018
(51) Int. Cl.: F01N 13/16, F16K 37/00, F16K 27/02, F02D 9/10, F02M 26/70

(54) **VENTIL FÜR EIN ABGASSYSTEM IN EINEM KRAFTFAHRZEUG**
VALVE FOR AN EXHAUST GAS SYSTEM IN A VEHICLE
SOUPAPE POUR UN SYSTÈME DE GAZ D'ÉCHAPPEMENT DANS UN VÉHICULE

(30) Priorität: 13.12.2017 EP 17465592
(43) Veröffentlichungstag der Anmeldung: 19.06.2019
(73) Patentinhaber: Vitesco Technologies GmbH, 30165 Hannover (DE)
(72) Erfinder: Petca, Eduard Cornel, 300218 Timisoara (RO)

(56) Entgegenhaltungen:
- EP-A1- 1 571 313
- EP-A1- 1 701 029
- EP-A2- 1 450 022
- DE-A1- 10 227 568

## Beschreibung

Gegenstand der Erfindung ist ein Ventil für ein Abgassystem in einem Kraftfahrzeug mit einem Gehäuse, mindestens einem Kanal, einer den Kanal verschließenden oder öffnenden Klappe, einem Elektromotor zum Betätigen der Klappe, einem Getriebe zur Übertragung der Bewegung des Elektromotors zur Klappe, einem die Klappenstellung ermittelnden Sensor und einem das Gehäuse verschließenden Deckel aus Kunststoff, wobei der Sensor in dem Deckel angeordnet ist und der Deckel ein Verstärkungselement aus Metall besitzt.

Derartige Ventile werden als ECV eingesetzt und sind somit bekannt. Zur Reglung des Abgasstromes durch die Klappenbewegung ist es notwendig, die Position der Klappe zu ermitteln. Der Sensor dient der Erfassung der Klappenposition, wobei der Sensor ein Sensor zur Erfassung von linearen Bewegungen ist. Während das Gehäuse aus Stabilitätsgründen aus Metall besteht, ist der Deckel aus Kunststoff gefertigt. Aufgrund des Einsatzes im Abgasstrang eines Kraftfahrzeugs ist das Ventil wechselnden Temperaturen ausgesetzt, so dass die aus unterschiedlichen Materialien bestehenden Deckel und Gehäuse Relativbewegungen zueinander ausführen. Dadurch kommt es zu geringen veränderlichen Abständen zwischen der in Gehäuse gelagerten Klappe und dem im Deckel angeordneten Sensor, aufgrund dessen der Sensor ein verändertes Signal liefert. Aufgrund gestiegener Anforderungen an die Regelung und damit an die Klappenbewegung sind solche durch andere Effekte wie die Relativbewegung hervorgerufene Beeinflussungen des Sensorsignals nicht mehr akzeptabel.

Aus der EP 1 701 029 A1 ist ein Ventil bekannt, das die Merkmale des Oberbegriffes von Patentanspruch 1 aufweist. Bei dem bekannten Ventil ist ein Kühlblech zwischen einer Platine und der Innenwand eines Kunststoffdeckels eines Gehäuses vorgesehen.

Die EP 1 571 313 A1 beschreibt eine Versorgungseinheit für eine Brennkraftmaschine, die ein Gehäuse umfasst, das durch einen Kunststoffdeckel verschlossen wird, welcher einen an der Seitenwand des Deckels angeordneten Haltering aus Metall aufweist.

Der Erfindung liegt daher die Aufgabe zugrunde, ein Ventil der eingangs genannten Art zu schaffen, welches eine hohe Regelgüte aufweist. Insbesondere Beeinflussungen des Sensorsignals durch Verformungen des Deckels sollen zumindest weitestgehend vermieden werden.

Erfindungsgemäß wird diese Aufgabe durch die kennzeichnenden Merkmale von Patentanspruch 1 gelöst.

Mit dem Vorsehen eines Verstärkungselements aus Metall wird die Steifigkeit des Deckels erhöht. Verformungen des Deckels werden auf diese Weise nahezu vollständig vermieden, was die Genauigkeit des Sensors unter allen Betriebsbedingungen erheblich verbessert.

Die Verformung des Deckels wird zuverlässig vermieden, da das Verstärkungselement mit dem Gehäuse verbunden ist. Durch die Verbindung des Verstärkungselements mit dem Gehäuse wird das Verstärkungselement zusätzlich gesichert. Das bedeutet, mögliche Verformungen des Deckels müssen nicht allein durch das Verstärkungselement verhindert werden. Die Verbindung mit dem Gehäuse unterstützt das Verstärkungselement gegen mögliche Verformungen. Zudem können so Langzeitbewegungen des Deckels, z.B. ein Fließen, ausgeglichen beziehungsweise kompensiert werden.

Die Anordnung des Verstärkungselements gestaltet sich besonders einfach, da dieses an der Außenseite des Deckels angeordnet ist. Die Anordnung an der Außenseite des Deckels ist besonders kostengünstig, da das Verstärkungselement leicht an den Deckel anpassbar ist. Zudem können bereits vorhandene Deckel weiter verwendet werden, ohne dass eine Neukonstruktion des Deckels erforderlich wäre. Allenfalls geringfügige Anpassungen an das Verstärkungselement sind hierbei ausreichend.

Für eine ausreichende Sicherheit gegen Verformung des Deckels und damit gegen Ungenauigkeiten des Sensors ist das Verstärkungselement vorteilhafterweise verformungssteif ausgebildet. In besonders einfacher Weise wird das dadurch erreicht, dass das Verstärkungselement eine Dicke besitzt, die größer als die Wandstärke des Deckels ist. Das hat den Vorteil, dass das Verstärkungselement eine relativ einfache Gestalt aufweisen kann.

In einer anderen Ausgestaltung besitzt das Verstärkungselement eine gleiche oder geringere Wanddicke als der Deckel. Die Formstabilität wird dann durch entsprechende Ausgestaltung des Verstärkungselements erreicht. Der Vorteil besteht darin, dass das Verstärkungselement mit einem geringeren Gewicht gestaltet werden kann.

Die Herstellung des Verstärkungselements ist besonders einfach, wenn es ein Stanzteil ist. Je nach Gestaltung lässt sich das Stanzteil in ein bis zwei Arbeitsschritten herstellen.

In einer besonders einfachen Weise ist das Verstärkungselement mit dem Gehäuse verschraubt. Die Schraubverbindung ist relativ einfach herzustellen. Ein weiterer Vorteil besteht darin, dass eine Schraubverbindung in einfacher Weise durch den Deckel hindurchgeführt werden kann, wobei eine entsprechende Abdichtung die Schutzfunktion des Deckels nicht negativ beeinflusst. In einer anderen vorteilhaften Ausgestaltung ist das Verstärkungselement mit dem Gehäuse verspannt. Das Verspannen bietet eine besonders einfache Befestigungsart, die keine zusätzlichen Bauteile benötigt. Lediglich am Gehäuse sind entsprechende Raststellen vorzusehen, in denen sich das Verstärkungselement einhängen lässt, um den Deckel mit dem Gehäuse zu verspannen.

Eine einfache Ausbildung des Verstärkungselements, welche besonders kostengünstig ist, wird mit einer Ausgestaltung als Platte erreicht. Ein solches Verstärkungselement besitzt aufgrund seiner Steifigkeit eine hohe Verstärkungskraft. Ein wesentlich leichteres Verstärkungselement wird dagegen in einer anderen Ausgestaltung dadurch erreicht, wenn das Verstärkungselement rahmenförmig ist. Der in sich geschlossene Rahmen ist dabei so ausgebildet, dass er an den wesentlichen, zur Verformung neigenden Deckelbereichen aufliegt, um diese zu stabilisieren. Auf diese Weise wird eine hohe Steifigkeit des Deckels bei geringem Gewicht erreicht.

An einem Ausführungsbeispiel wird die Erfindung näher erläutert.

Es zeigt in
- Fig. 1:: ein erfindungsgemäßes Ventil,
- Fig. 2:: eine vergrößerte Schnittdarstellung des Ventils aus Fig.1,
- Fig. 3:: den Deckel nach Fig. 1.

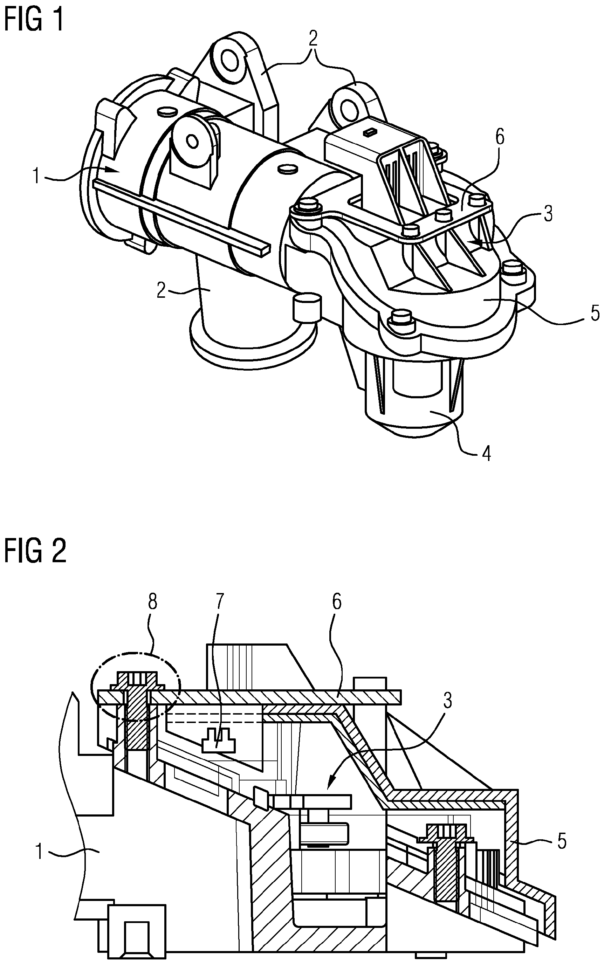

Das Ventil in Figur 1 besteht aus einem Gehäuse 1 mit mehreren Kanälen 2 für ein Fluid. In einem Kanal 2 ist eine Klappe drehbar auf einer Welle gelagert, so dass die Klappe bei Drehung der Welle, den Kanal 2 öffnet oder verschließt. Die Welle durchdringt das Gehäuse 1 und reicht bis in einen Bereich 3, in dem ein Getriebe angeordnet ist, um die Welle mit einem Elektromotor 4 zu verbinden. Der Getriebebereich 3 ist von einem Deckel 5 abgedeckt. Zur Bestimmung der Position der Klappe ist im Deckel 5 ein Sensor angeordnet, der die Drehbewegung des Getriebes erfasst, um damit den Öffnungsquerschnitt des Kanals 2 regeln zu können. In Auswertung der Sensorsignale wird der Elektromotor 4 angesteuert, um die Klappe dementsprechend zu verdrehen. Durch das Verdrehen der Klappe lässt sich der Strom des durchströmenden Fluids regeln. Auf der Außenseite des Deckels 5 ist ein Verstärkungselement 6 aus Metall angeordnet. Das Verstärkungselement 6 ist als Stanzteil ausgebildet, welches auf einigen Bereichen des Deckels 5 aufliegt und so den Deckel 5 verstärkt. Infolge der Verstärkung werden Verformungen des Deckels 5 und damit des in diesen integrierten Sensor verhindert. Damit bleibt der Abstand des Sensors in Bezug auf das Getriebe unverändert, so dass der Sensor unter allen Betriebsbedingungen die Position der Klappe zuverlässig und gleichbleibend bestimmt.

Figur 2 zeigt das Gehäuse 1 im Bereich 3 des Getriebes. Der aus einem Kunststoff bestehende Deckel 5 deckt den Getriebebereich 3 ab. Im Deckel 5 ist der Sensor 7 befestigt. Der Sensor 7 erfasst Drehbewegungen eines Getriebebestandteils, um so die Klappe über die Ansteuerung des Elektromotors 4 regeln zu können. Hierzu muss der Abstand des Sensors 7 zu dem zu detektierenden Getriebebestandteils konstant bleiben. Auf der Außenseite des Deckels 5 ist das Verstärkungselement 6 angeordnet. Das Verstärkungselement 6 ist direkt mit dem Gehäuse 1 verschraubt 8. Durch die direkte Verschraubung mit dem Gehäuse 1 wird verhindert, dass sich Verformungen des Deckels 5 durch thermische Einflüsse oder Langzeiteffekte wie Fließen oder Setzen negativ auf die Position des Sensors auswirken.

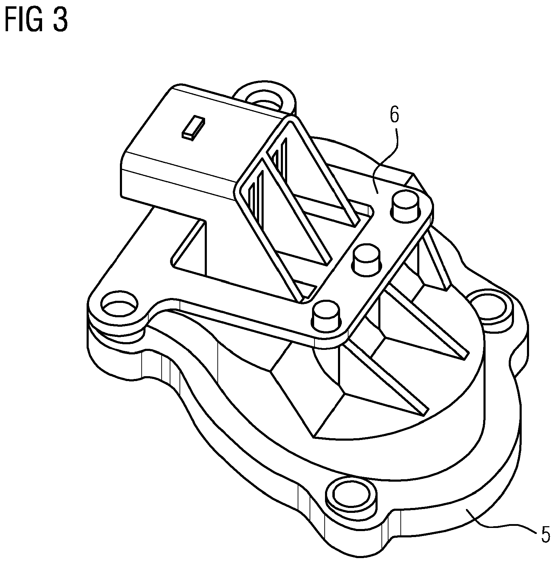

In Figur 3 ist der Deckel 5 mit dem Verstärkungselement 6 gezeigt. Das Verstärkungselement 6 besitzt eine rahmenförmige Gestalt. Das rahmenförmige Verstärkungselement 6 ist so gestaltet, dass es nur bereichsweise auf dem Deckel 5 aufliegt. Diese Bereiche sind die für die Position des Sensors entscheidenden Bereichs, welche anfällig für Verformungen sind, verstärkt.

## Patentansprüche

1. Ventil für ein Abgassystem in einem Kraftfahrzeug mit einem Gehäuse, mindestens einem Kanal, einer den Kanal verschließenden oder öffnenden Klappe, einem Elektromotor zum Betätigen der Klappe, einem Getriebe zur Übertragung der Bewegung des Elektromotors zur Klappe, einem die Klappenstellung ermittelnden Sensor und einem das Gehäuse verschließenden Deckel aus Kunststoff, wobei der Sensor in dem Deckel angeordnet ist und der Deckel ein Verstärkungselement aus Metall besitzt, **dadurch gekennzeichnet, dass** das Verstärkungselement (6) auf der Außenseite des Deckels (5) mindestens auf einigen Bereichen desselben auf liegend angeordnet und mit dem Gehäuse (1) verbunden ist.

2. Ventil nach Anspruch 1, **dadurch gekennzeichnet, dass** das Verstärkungselement (6) eine Dicke besitzt, die größer als die Wandstärke des Deckels ist.

3. Ventil nach Anspruch 1, **dadurch gekennzeichnet, dass** das Verstärkungselement (6) ein Stanzteil ist.

4. Ventil nach zumindest einem der Ansprüche 1 bis 3, **dadurch gekennzeichnet, dass** das Verstärkungselement (6) mit dem Gehäuse (1) verschraubt ist.

5. Ventil nach zumindest einem der Ansprüche 1 bis 4, **dadurch gekennzeichnet, dass** das Verstärkungselement (6) mit dem Gehäuse (1) verspannt ist.

6. Ventil nach zumindest einem der Ansprüche 1 bis 5, **dadurch gekennzeichnet, dass** das Verstärkungselement (6) zumindest im Bereich der Verschraubung mit dem Gehäuse (1) in Kontakt tritt.

7. Ventil nach zumindest einem der Ansprüche 1 bis 6, **dadurch gekennzeichnet, dass** das Verstärkungselement (6) rahmenförmig gestaltet ist.

## Claims

1. Valve for an exhaust-gas system in a motor vehicle, having a housing, at least one channel, a flap which closes or opens the channel, an electric motor for actuating the flap, a gearing for transmitting the movement of the electric motor to the flap, a sensor which determines the flap position and a cover composed of plastic which closes the housing, wherein the sensor is arranged in the cover and the cover has a reinforcing element composed of metal, **characterized in that** the reinforcing element (6) is arranged on the outer side of the cover (5) so as to bear at least on some regions thereof and is connected to the housing (1).

2. Valve according to Claim 1, **characterized in that** the reinforcing element (6) has a thickness which is greater than the wall thickness of the cover.

3. Valve according to Claim 1, **characterized in that** the reinforcing element (6) is a punched part.

4. Valve according to at least one of Claims 1 to 3, **characterized in that** the reinforcing element (6) is screwed to the housing (1).

5. Valve according to at least one of Claims 1 to 4, **characterized in that** the reinforcing element (6) is braced to the housing (1).

6. Valve according to at least one of Claims 1 to 5, **characterized in that** the reinforcing element (6) comes into contact with the housing (1) at least in the region of the screw connection.

7. Valve according to at least one of Claims 1 to 6, **characterized in that** the reinforcing element (6) is of frame-shaped form.

## Revendications

1. Soupape pour un système de gaz d'échappement dans un véhicule automobile, comprenant un corps, au moins un canal, un clapet fermant ou ouvrant le canal, un moteur électrique pour actionner le clapet, une transmission pour transférer le mouvement du moteur électrique au clapet, un capteur déterminant la position de clapet et un couvercle en matière plastique refermant le corps, le capteur étant disposé dans le couvercle et le couvercle possédant un élément de renforcement en métal, **caractérisée en ce que** l'élément de renforcement (6) est disposé sur la face extérieure du couvercle (5) en appui sur au moins certaines zones de celui-ci, et est relié au corps (1).

2. Soupape selon la revendication 1, **caractérisée en ce que** l'élément de renforcement (6) possède une épaisseur qui est supérieure à l'épaisseur de paroi du couvercle.

3. Soupape selon la revendication 1, **caractérisée en ce que** l'élément de renforcement (6) est une pièce découpée.

4. Soupape selon au moins l'une des revendications 1 à 3, **caractérisée en ce que** l'élément de renforcement (6) est vissé sur le corps (1).

5. Soupape selon au moins l'une des revendications 1 à 4, **caractérisée en ce que** l'élément de renforcement (6) est serré sur le corps (1).

6. Soupape selon au moins l'une des revendications 1 à 5, **caractérisée en ce que** l'élément de renforcement (6) entre en contact avec le corps (1) au moins au niveau du vissage.

7. Soupape selon au moins l'une des revendications 1 à 6, **caractérisée en ce que** l'élément de renforcement (6) est conçu en forme de cadre.
